# EUROPEAN PATENT APPLICATION

(11) **EP 2 117 148 A1**
(43) Date of publication of application: **11.11.2009**
(21) Application number: 08155322.4
(22) Date of filing: 29.04.2008
(51) Int. Cl.: H04J 14/02

(54) **Multiplexer with additional optical filtering**

(71) Applicant: LUCENT TECHNOLOGIES INC., Murray Hill NJ 07974-0636 (US)
(72) Inventor: Raddatz, Lutz, 08523 Plauen (DE); Liu, Xiang, Marlboro, New Jersey 07746 (US); Sethumadhavan, Chandrasekhar, Matawan, New Jersey 07747 (US)
(74) Representative: Brose, Gerhard

(57) **Abstract**

The invention relates to on optical network element (20a) for multiplexing single wavelength optical signals, the optical network element (20a) comprising: at least one input interface (201) for an input optical wavelength division multiplexed signal; at least one output interface (202) for an output optical wavelength division multiplexed signal; at least one tributary interface (203, 204) forgot least one single wavelength optical signal to be added to a pass-through optical wavelength division multiplexed signal or to be dropped from the input optical wavelength division multiplexed signal; and at least one wavelength selective element (207) connecting the tributary interface (203, 204) with the input interface (201) or the output interface (202), wherein the optical network element (20a) further comprises of least one optical filtering element (208) with a filter bandwidth which is narrower than the filler bandwidth of the wavelength selective element (207), The invention further relates to a wavelength division multiplexing optical communication system (1b) and to a method for multiplexing single wavelength optical signals in a wavelength division multiplexing optical communication system (1b).

## Description

### FIELD OF THE INVENTION

The invention relates to on optical network element according to the preamble of claim 1, to a wavelength division multiplexing optical communication system according to the preamble of claim 9, and to a method for multiplexing single wavelength optical signals in a wavelength division multiplexing optical communication system according to the preamble of claim 11.

### BACKGROUND OF THE INVENTION

WDM (WDM = wavelength division multiplexing) is a well-known technology for expanding the transmission capacity of an optical fibre link by transmitting optical signals at different optical wavelengths using different optical channels. DWDM (DWDM = dense WDM) uses narrower optical channel spacings with a value of 100 GHz or smaller in order to maximize the number of optical channels fitting into the usable bandwidth of optical amplifers. An important feature of current DWDM systems is the support of meshed network architectures, and the ability to route optical channels i.e. individual single wavelength optical signals to different destinations in the network without requiring expensive optical-electrical-optical conversion.

An OADM (OADM = optical add-drop multiplexer) is an optical network device used in DWDM systems to add and/or to drop one or more single wavelength optical signals to or from an optical WDM signal transmitted via an optical fibre. In US Pat. No. 8,822,095 the basics of an OADM are described. The main components of an OADM are an optical demultiplexer for separating optical channels from the input interface onto different demultiplexer interfaces, a set of interfaces for adding and dropping optical channels, an optical multiplexer for combining the optical channels that are to continue on from the demultiplexer interface with those from the add interfaces onto an output interface, and wavelength selective elements for configuring the optical paths between the optical demultiplexer, the optical multiplexer and the add and drop interfaces. Each OADM is manufactured to odd and to drop specific optical channels.

Adding or dropping additional optical channels to or from an optical WDM signal transmitted in a wavelength division multiplexing optical communication system with conventional OADMs requires to insert manually additional OADMs or exchanging existing OADMs. This is costly and sometimes requires to remove all optical traffic from the DWDM system for a specific time. With an ROADM (ROADM = reconfigurable OADM) the adding and/or dropping of optical channels can be configured and reconfigured remotely, e.g. by using one or more WSSs (WSS = wavelength selective switch) in the ROADM, without interruption of the "pass-through" optical channels.

A variety of technologies are available for implementing ROADM functionalities:
- demultiplexer/bulk switch matrix / multiplexer arrangements
- systems using passive wideband splitters/combiners and wavelength blockers,
- systems using integrated wavelength selective switches.

In US Pat. No. 6,788,899 an optical pre-filter for an OADM is disclosed, which is used to remove bands outside of the bond which is to be processed in the OADM. The optical pre-filter con have a bandwidth less than the free spectral range of another optical filter of the OADM and preferably has a bandpass brindwidth approximately the same as the width of a specific ITU window passband of the optical input signal, so that only one band of the bands of the optical input signal is processed by the OADM. Therewith a specific bond containing several optical channels is filtered with the optical pre-filter.

### SUMMARY OF THE INVENTION

All ROADM technologies face a problem that the passband characteristics of an ROADM negatively impact the signal quality of the single wavelength optical signal of the DWDM channel. Since the optical bandwidth of a DWDM channel approaches or even exceeds the passband width of the WSS of the ROADM, the loss ripple (LR = loss ripple) within the passband of the WSS degrades the signal quality. Usually, the LR increases towards the edges of the filter passband, Furthermore, the optical filter (e.g, a WSS) in the ROADM responsible for the channel separation and channel combination, usually has within its bandwidth group delay ripple (GDR = group delay ripple), which is a property that also degrades the signal quality. Usually, the GDR also increases towards the edges of the filter passband.

The impacts of both effects increase in particular, when a DWDM channel traverses several ROADMs in a wavelength division multiplexing optical communication system. Small variations in the fabrication process of the optical filters can result in a frequency shift of the passband location and a frequency shift of the locations of the deleterious GDR and LR. The DWDM channel is filtered with slightly different filter characteristics of the ROADMs which narrows the bandwidth of the DWDM channel somewhat more each time an ROADM is passed. Furthermore, the frequency dependent distortions due to different GDR characteristics of the WSS's at each ROADM add up each time an ROADM is passed.

The negative impacts of the ROADM characteristics on the signal quality of the optical channel can be kept under control if an additional optical filtering element is used logether with the ROADM in the wavelength division multiplexing optical communication system or if such an optical filtering element is incorporated to the ROADM.

According to the invention on optical network element for a wavelength division multiplexing optical communication system is disclosed, the optical network element has: at least one input interface for an input optical wavelength division multiplexed signal; at least one output interface for an output optical wavelength division multiplexed signal; at least one tributary interface for at least one add single wavelength optical signal to be added to a pass-through optical wavelength division multiplexed signal or for at least one drop single wavelength optical signal to be dropped from the input optical wavelength division multiplexed signal; and at least one wavelength selective element connecting the tributary interface with the input interface or the output interface. The optical network element contains at least one optical filtering element with a filter bandwidth which is narrower than the filter bandwidth of the wavelength selective element.

The additional optical filtering element can remove those parts of the signal spectrum near the band edges of the optical network element (e.g. an add-drop multiplexer, an odd multiplexer, a drop multiplexer) which are affected most by the GDR of the switching element of the optical network element. The additional optical filtering element deliberately reduces the channel bandwidth beyond what the optical network element can provide. In other words an idea of the invention is to "trade in" channel bandwidth for a reduction in optical signal distortions by the optical network element.

The main advantage of the invention is the relatively simple implementation possibility. An optical filtering element with the desired optical characteristic can be added as an additional component with little effort to the optical network element or as a separate element to the wavelength division multiplexing optical communication system. A filter can be used which has less than 3 dB insertion loss and which has a periodic passband, so that only one optical filtering element is required per optical network element. Preferably, the periodicity of the filter passband is designed to be the some as the channel spacing of the DWDM signal, e.g. 50 GHz.

Especially for wavelength division multiplexing optical communication systems with increased bitrate and decreased channel spacing, e.g. 40 Gb/s per-channel data rate and 50 GHz channel spacing, in which deleterious effects by GDR increase the use of an additional optical filtering element is beneficial.

Further embodiments for the optical network element are disclosed in dependent claims.

Furthermore, a wavelength division multiplexing optical communication system and a method for multiplexing single wavelength optical signals in a wavelength division multiplexing optical communication system are disclosed in further independent and dependent claims.

### BRIEF DESCRIPTION OF THE DRAWINGS

Other characteristics and advantages of the invention will become apparent in the following detailed description of preferred embodiments of the invention. The preferred embodiments of the invention will be illustrated by the accompanying drawings given by way or non-limiting illustrations.

Figure 1 shows a block diagram of a wavelength division multiplexing optical communication system in accordance with a first embodiment of the invention.

Figure 2 shows a block diagram of a wavelength division multiplexing optical communication system in accordance with a second embodiment of the invention.

Figure 3 shows a block diagram of o wavelength division multiplexing optical communication system in accordance with a third embodiment of the invention.

Figure 4 shows a block diagram of a wavelength division multiplexing optical communication system in accordance with a fourth embodiment of the invention.

Figure 5 shows a block diagram of a wavelength division multiplexing optical communication system in accordance with a fifth embodiment of the invention.

Figure 6 shows a characteristic curve diagram illustrating the passband amplitude response of an optical add-drop multiplexer in the prior art and of an optical filtering element according to the embodiments of the invention.

Figure 7 shows a characteristic curve diagram illustrating the passband phase response of an optical add-drop multiplexer in the prior art and of an optical filtering element according to the embodiments of the invention.

### DETAILED DESCRIPTION OF THE INVENTION

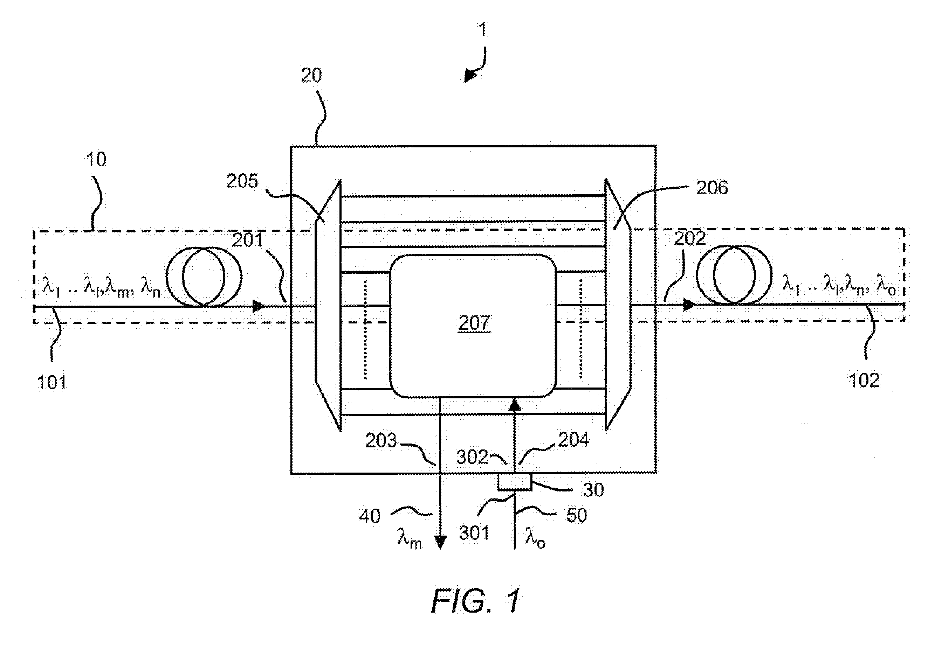

In the embodiment of Figure 1 a wavelength division multiplexing optical communication system 1 contains an optical transmission path 10, an optical add-drop multiplexer 20, an optical filtering element 30, a drop fibre 40, and on add fibre 50. Further optical transmission paths, optical add-drop multiplexers, optical filtering elements, add fibres, and drop fibres of the wavelength division multiplexing optical communication system 1 are not shown for simplification.

The optical transmission path 10 contains an optical fibre element 101 and an optical fibre element 102. The optical transmission path 10 can have more than two optical fibre elements.

The optical add-drop multiplexer 20 contains on input interface 201, an output interface 202, a drop interface 203, an add interface 204, a demultiplexer 205, a multiplexer 206, and a wavelength selective element 207. The optical add-drop multiplexer 20 can have more than one input interface, more than one output interface, more than one drop interface, more than one add interface, more than one demultiplexer, more than one multiplexer, and more than one wavelength selective element.

Tributary interfaces is a common designation for the add and drop interfaces of an add-drop multiplexer, of on add multiplexer or of a drop multiplexer. The input, output, and tributary interfaces of a multiplexer can be interconnected via a combination of separate components (multiplexers, wavelength selective elements and demultiplexers) or via wavelength selective elements with multiplexer and demultiplexer functions.

The optical filtering element 30 contains on input interface 301 and an output interface 302.

One end of the optical fibre element 101 is connected to the input interface 201 of the optical add-drop multiplexer 20 and one end of the optical fibre element 102 is connected to the output interface 202 of the optical add-drop multiplexer 20.

One end of the drop fibre 40 is connected to the drop interface 203 of the optical add-drop multiplexer 20 and one end of the add fibre 50 is connected to input interface 301 of the optical filtering element 30.

The output interface 302 of the optical -filtering element 30 is connected to the add interface 204 of the optical odd-drop multiplexer 20, thereby the optical filtering element 30 is not an integral part of the optical odd-drop multiplexer 20. If the odd-drop multiplexer 20 contains more than one add interface than the optical filtering element 30 or separate optical filtering elements can be connected to each add interface.

An optical wavelength division multiplexed signal is transmitted via the optical transmission path 10, The optical wavelength division multiplexed signal transmitted via the optical fibre element 101 contains one or more single wavelength optical signals λ₁..λ₁λₘλₙ. When the optical wavelength division multiplexed signal is received by the optical add-drop multiplexer 20 via the input interface 201, the demultiplexer 205 splits the optical wavelength division multiplexed signal in its single wavelength optical signals λ₁/../λ₁/λₘ/λₙ. When the single wavelength optical signals λ₁/../λ₁/λₘ/λₙ pass the wavelength selective element 207 the single wavelength optical signal λₘ is redirected to the drop interface 203.

Furthermore, a single wavelength optical signal λₒ is filtered by the optical filtering element 30, passes the add interface 204 of the optical add-drop multiplexer 20 and arrives at the, wavelength selective element 207.

In the wavelength selective element 207 the single wavelength optical signal λₒ and the single wavelength optical signals λ₁/../λ₁/λₙ are combined by the multiplexer 206 to an output optical wavelength division multiplexed signal λ₁..λ₁,λₙ,λₒ, pass the output interface 202 and are transmitted via the optical fibre element 102.

Placing optical filtering elements for each source of the wavelength division multiplexing optical communication system 1 only in the add paths of the optical add-drop multiplexes has the advantage, that each single wavelength optical signal is filtered only once by one of the optical filtering elements of the wavelength division multiplexing optical communication system 1.

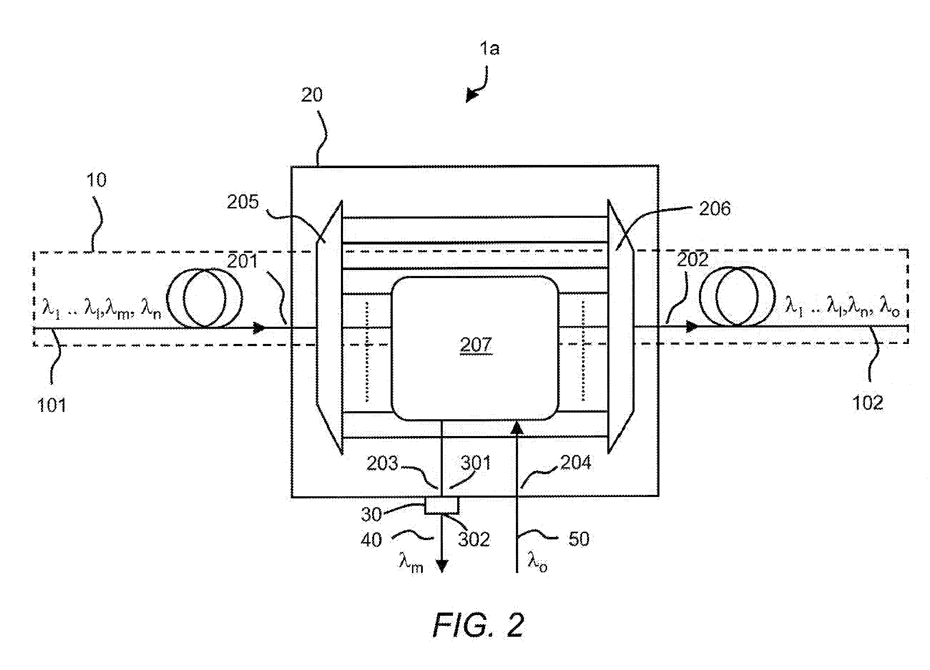

In the embodiment of Figure 2 a wavelength division multiplexing optical communication system 10 contains an optical transmission path 10, an optical add-drop multiplexer 20, art optical filtering element 30, a drop fibre 40, and an add fibre 50. Further optical transmission paths, optical add-drop multiplexers, optical filtering elements, add fibres, and drop fibres of the wavelength division multiplexing optical communication system 1a are not shown for simplification. The elements in the embodiment shown in Figure 2 that correspond to elements of the embodiment of Figure 1 have been designated by the same reference numerals.

In comparison to Figure 1, the input interlace 301 of the optical filtering element 30 in the embodiment of Figure 2 is connected to the drop interface 203 of the optical add-drop multiplexer 20, thereby the optical filtering element 30 is not an integral part of the optical add-drop multiplexer 20. If the add-drop multiplexer 20 contains more than one drop interface, than the optical filtering element 30 or separate optical filtering elements can be connected to each drop interface.

In comparison to Figure 1, one end of the drop fibre 40 is connected to the output interface 302 of the optical filtering element 80 and one end of the add fibre 50 is connected to the odd interface 204 of the optical add-drop multiplexer 20.

In comparison to the method performed by the wavelength division multiplexing optical communication system of Figure 1, in the embodiment of Figure 2, if a single wavelength optical signal λₘ is redirected to the drop interface 203 it is filtered in addition by the optical filtering element 30, when the single wavelength optical signal λₘ has passed the drop interface 203.

Furthemore, in comparison to the method of Figure 1, in the embodiment of Figure 2 a single wavelength optical signal λₒ is not filtered before it passes the add interface 204 of the optical add-drop multiplexer 20.

Placing optical filtering elements for each sink of the wavelength division multiplexing optical communication system la only in the drop paths of the optical add-drop multiplexers has the advantage, that each single wavelength optical signal is filtered only once by one of the optical filtering elements of the wavelength division multiplexing optical communication system 1a.

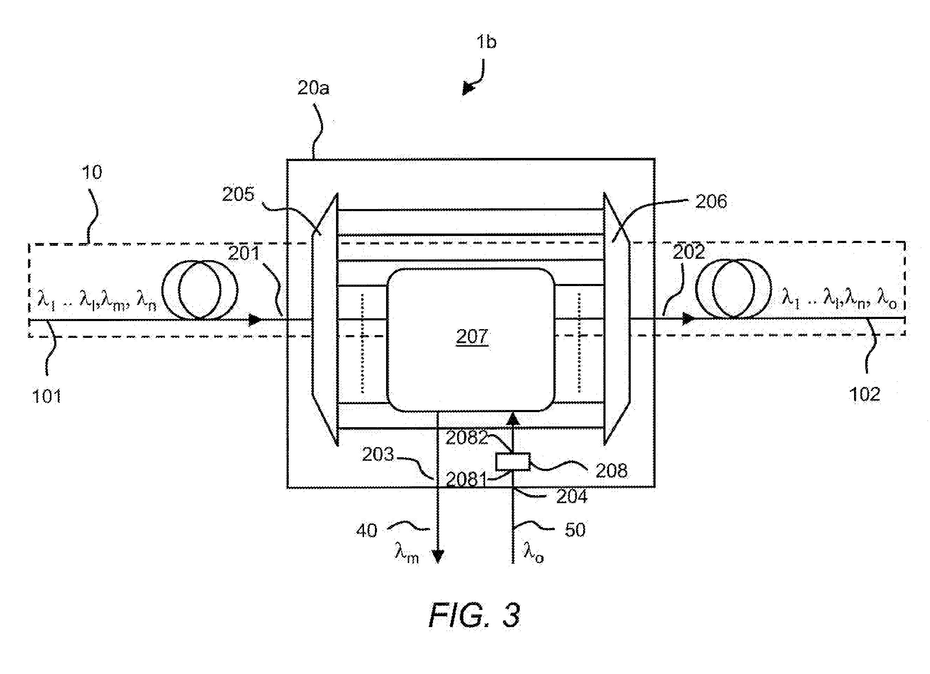

In the embodiment of Figure 3 a wavelength division multiplexing optical communication system 1b contains an optical transmission path 10, an optical odd-drop multiplexer 20a, a drop fibre 40, and an add fibre 50. Further optical transmisson paths, optical add-drop multiplexers, add fibres, and drop fibres of the wavelength division multiplexing optical communication system 1b are not shown for simplification. The elements in the embodiment shown in Figure 3 that correspond to elements of the embodiment of Figure 1 have been designated by the same reference numeral.

In comparison to Figure 1, the optical add-drpp multiplexer 20a further contains an optical filtering element 208, which is placed between the add interface 204 and the wavelength selective element 207 of the optical add-drop multiplexer 20a. If the add-drop multiplexer 20a contains more than one add interface and/or more than one wavelength selective element, than separate optical filtering elements can be placed between each add interface and the corresponding wavelength selective element.

The optical filtering element 208 contains an input interface 2081 and an output interface 2082.

The add interface 204 of the optical add-drop multiplexer 20a is connected to the input interface 2081 of the optical filtering element 208. The output interface 2082 of the optical filtering element 208 is connected to the wavelength selective element 207.

In comparison to the method performed by the wavelength division multiplexing optical communication system of Figure 1, in the embodiment of Figure 3 a single wavelength optical signal λₒ is filtered by the optical filtering element 208 after passing the add interface 204 of the optical add-drop multiplexer 20a.

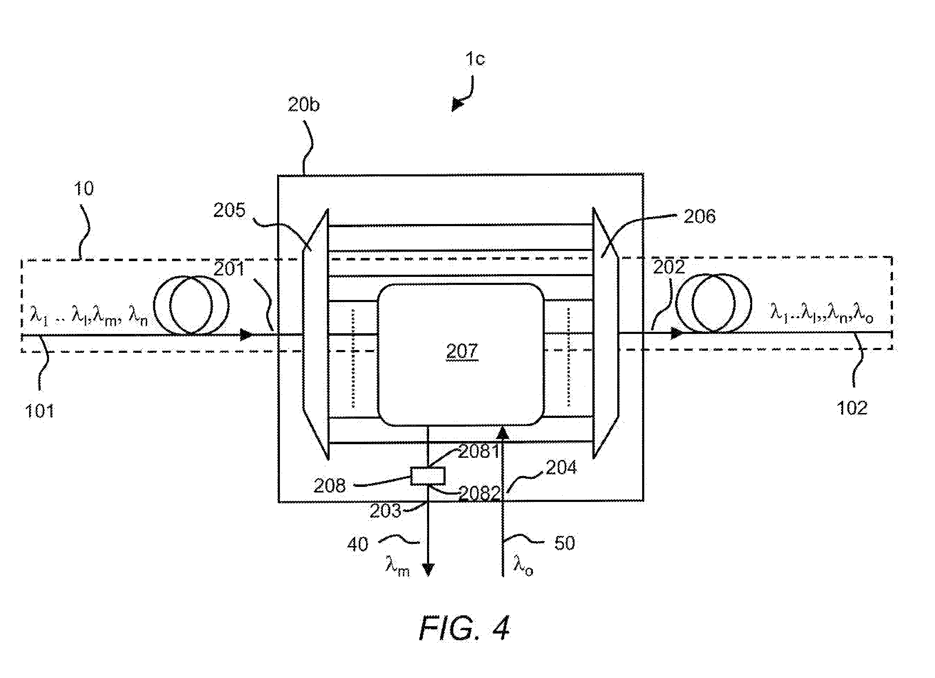

In the embodiment of Figure 4 a wavelength division multiplexing optical communication system 1c contains an optical transmission path 10, an optical add-drop multiplexer 20b, a drop fibre 40, and an add fibre 50. Further optical transmission paths, optical add-drop multiplexers, add fibres, and drop fibres of the wavelength division multiplexing optical communication system 1c are not shown for simplification. The elements in the embodiment shown in Figure 4 that correspond to elements of the embodiment of Figure 3 have been designated by the same reference numerals.

In comparison to Figure 3, the optical filtering element 208 is placed between the drop interface 203 and the wavelength selective element 207 of the optical add-drop multiplexer 20b. If the add-drop multiplexer 20b contains more than one drop interface and/or more than one wavelength selective element, than separate optical filtering elements can be placed between each drop interface and the corresponding wavelength selective element.

The wavelength selective element 207 of the optical add-drop multiplexer 20b is connected to the input interface 2081 of the optical filtering element 208. The output interface 2082 of the optical filtering element 208 is connected to the drop interface 203 of the optical add-drop multiplexer 20b.

in comparison to the method performed by the wavelength, division multiplexing optical communication system of Figure 2, in the embodiment of Figure 4 a single wavelength optical signal λₘ is filtered by the optical filtering element 208 before passing the drop interlace 203 of the optical odd-drop multiplexer 20b.

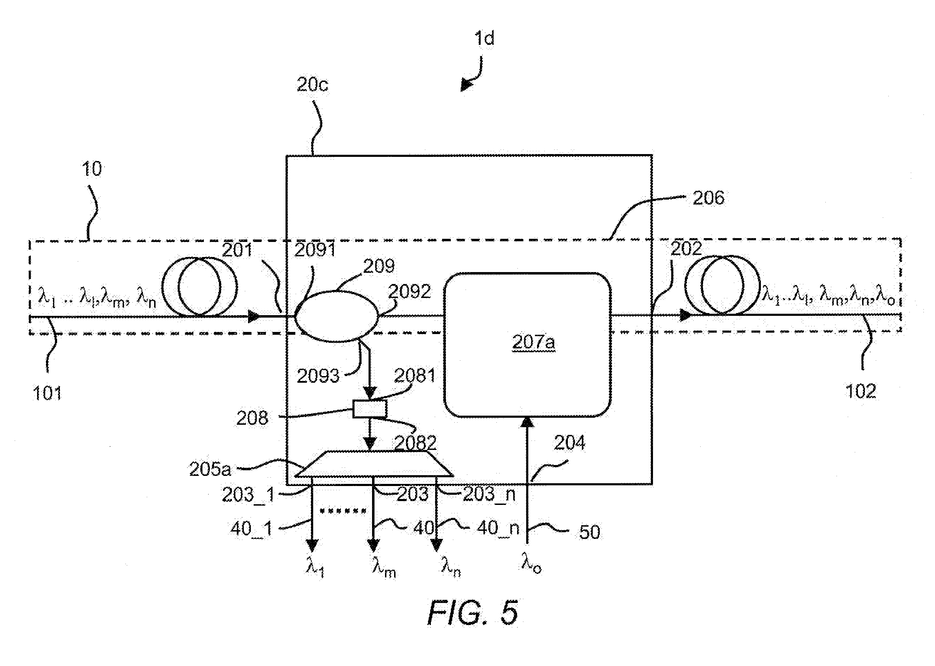

In the embodiment of Figure 5 a wavelength division multiplexing optical communication system 1d contains an optical transmission path 10, a reconfigurable optical add-drop multiplexer 20c, a group of drop fibres 40_1, 40_1,..,40,..,40_n and an add fibre 50. Further optical transmission paths, optical add-drop multiplexers, add fibres, and groups of drop fibres of the wavelength division multiplexing optical communication system 1d are not shown for simplification. The elements in the embodiment shown in Figure 5 that correspond to elements of the embodiment of Figure 1 and Figure 3 have been designated by the some reference numerals.

The reconfigurable optical add-drop multiplexer 20c contains an input interface 201, an output interface 202, a group of drop interfaces 203_1, 203_2,..,203,..,203_n, an add interface 204, a demultiplexer 205a, a wavelength selective element 207a, an optical filtering element 208, and a directional coupler 209. The optical add-drop multiplexer 20c can have more than one input interface, more than one output interface, more than one add interface, more than one group of drop interfaces, more than one wavelength selective element, more than one directional coupler, and more than one demultiplexer.

The directional coupler 209 contains an input interface 2091, an output interface 2092, and a drop interface 2093.

The input interface 201 of the reconfigurable optical add-drop multiplexer 20c is connected to the input interface 2091 of the directional coupler 209. The output interface 2092 of the directional coupler 209 is connected to the wavelength selective element 207a of the reconfigurable optical add-drop multiplexer 20c. The drop interface 2093 of the directional coupler 209 is connected to the input interface 2081 of the optical filtering element 208. The output interface 2082 of the optical filtering element 208 is connected to the input of the demultiplexer 205a. The group of drop interfaces 203_1, 203_2,..,203,..,203_n is connected to the output of the demultiplexer 205a. The group of drop fibres 40_1, 40_1,..,40,..,40_n is connected to the group of drop interfaces 203_1, 203_2,..,203,..,203_n. One end of the add fibre 50 is connected to the input interface 204 of the reconfigurable optical add-drop multiplexer 20c. The add interface 204 is connected to the wavelength selective element 207a. The wavelength selective element 207a is connected to the output interface 202 of the reconfigurable optical add-drop multiplexer 20c.

An input optical wavelength division multiplexed signal is transmitted via the optical transmission path 10. The input optical wavelength division multiplexed signal transmitted via the optical fibre element 101 contains one or more single wavelength optical signals λ₁..λ₁,λₘ,λₙ. If the optical wavelength division multiplexed signal λ₁..λ₁,λₘ,λₙ receives the reconfigurable optical add-drop multiplexer 20c via the input interface 201, the directional coupler 209 couples one part of the transmission power of the input optical wavelength division multiplexed signal λ₁..λ₁,λₘ,λₙ to the drop interface 2093 of the directional coupler 209. The other part of the transmission power of the input optical wavelength division multiplexed signal λ₁..λ₁,λₘ,λₙ posses the output interface 2092 of the directional coupler 209 and arrives at the wavelength selective element 207a. That part of the transmission power of the input optical wavelength division multiplexed signal λ₁..λ₁,λₘ,λₙ coming from the drop interface 2093 of the directional coupler 209 is filtered by the optical filtering element 208 with a periodic passband with a periodicity equal to the channel spacing of the input optical wavelength division multiplexed signal λ₁..λ₁,λₘ,λₙ and then arrives at the demultiplexer 205a, In the demultiplexer 205a the input optical wavelength division multiplexed signal λ₁..λ₁,λₘ,λₙ is split into single wavelength optical signals λ₁/../λ₁/λₘ/λₙ. Each of the single wavelength optical signals λ₁/../λ₁/λₘ/λₙ is extracted from the reconfigurable optical add-drop multiplexer 20c via one of the drop interfaces. 203_1, 203_2,..,203,..,203_n and coupled into one of the drop fibres 40_1,40_2,..40,...,40_n.

Furthermore, a single wavelength optical signal λₒ passes the add interface 204 of the reconfigurable optical add-drop multiplexer 20c and arrives at the wavelength selective element 207a.

In the wavelength selective element 207a the single wavelength optical signal λₒ and the optical wavelength division multiplexed signal λ₁..λ₁,λₘ,λₙ coming from the output interface 2092 of the directional coupler 209 are combined to an output optical wavelength division multiplexed signal λ₁..λ₁,λₘ,λₙ,λₒ, pass the output interface 203 and are transmitted via the optical fibre element 102.

Placing optical filtering elements for each sink of the wavelength division multiplexing optical communication system 1d only in the drop paths of the reconfigurable optical add-drop multiplexes has the advantage, that each single wavelength optical signal is filtered only once by one of the optical filtering elements of the wavelength division multiplexing optical communication system 1d.

The dropped single wavelength optical signals may not pass through the wavelength selective element 207 or 207a to reach the output interface 202 in order for wavelength reuse. But the dropped single wavelength optical signals can be added via the add interface 50 again, which is used e.g. to add mesh traffic in meshed traffic configurations of the wavelength division multiplexing optical communication system.

The additional filtering of the single wavelength optical signals λ₁/../λ₁/λₘ/λₙ/λₒ at the optical filtering elements 30 or 208 is performed in such a way, that those parts of the signal spectrum near the band edges, which are affected most by the group delay distortions of the wavelength selective element 207 or 207a are removed. For this function, the optical filtering elements 30 and 208 require specific bandwidth and group delay properties.

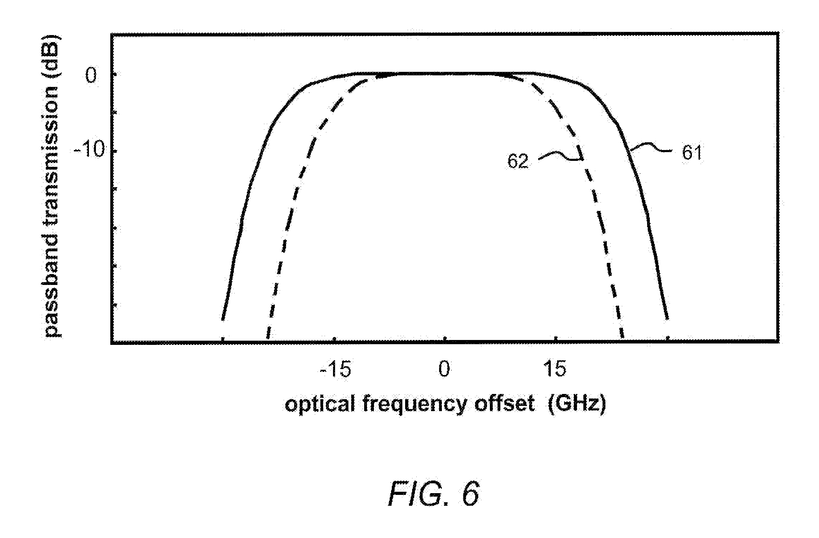

The characteristic curve diagram of Figure 6 schematically illustrates d passband transmission in dB as a function of an optical frequency offset in GHz. A passband amplitude response of the wavelength selective element 207 or 207a is sketched with a solid line 61. In addition, a passbond amplitude response of a filtering element 30 or 208 according to the embodiments fo the invention is sketched with a dashed line 62. The passband amplitude bandwidth 62 of the optical filtering element 30 or 208 is narrower than that of the wavelength selective element 207 or 207a. The passband amplitude bandwidth 62 can be optimized in such a way that on the one hand, the parts of the signal spectrum near the band edges, which are affected most by the group delay distortions of the wavelength selective element 207 or 207a are removed. On the other hand, the passband amplitude bandwidth 62 can be wide enough to minimise the signal distortions respectively the additional reduction in bandwidth of the single wavelength optical signals λ₁/../λ₁/λₘ/λₙ/λₒ caused by the optical filtering element 30 or 208 itself.

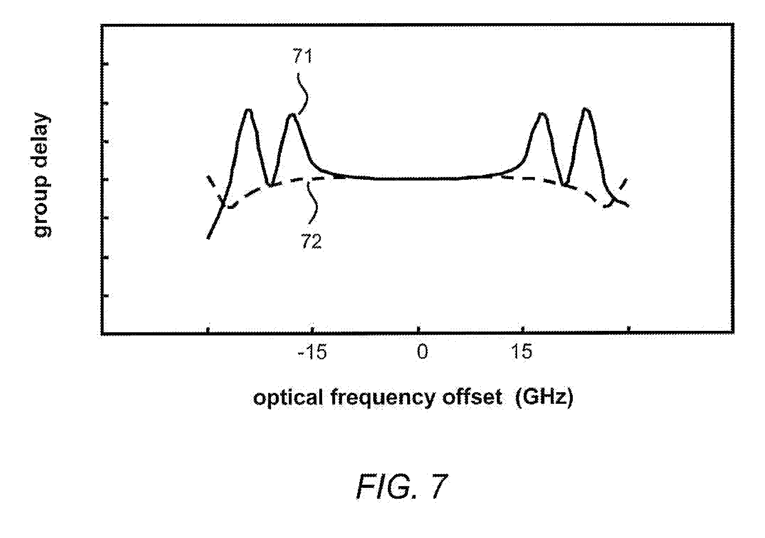

The characteristic curve diagram of Figure 7 illustrates a group delay as a function of an optical frequency offset in GHz. A group delay response of the wavelength selective element 207 or 207a is sketched with a solid line 71. In addition, a group delay response of the optical filtering element 30 or 208 according to embodiments of the invention is sketched with a dashed line 72. The optical filtering element 30 or 208 has a group delay characteristic with minimised group delay variations across the filter bandwidth. Such group delay characteristics can be obtained by using a specific optical filtering element 30 or 208. Known filter designs like an AWG (AWG = arrayed waveguide grating) or a wavelength interleaver filter can provide such required filter characteristics and can be designed to have a periodic passband identical to the channel spacing of the WDM of DWDM signal. If such filter designs are used in the optical filtering element, only one optical filtering element is required per optical network element. It should be understood, that each optical filtering element can further include other or additional filters to implement the desired filter characteristics.

If the optical filtering element 30 or 208 is placed only in the add or drop paths within the wavelength division multiplexing optical communication system 1, 1a, 1b, 1c, 1d each of the single wavelength optical signals λ₁/../λ₁/λₘ/λₙ/λₒ traverses only one optical filtering element 30 or 208 within the wavelength division multiplexing optical communication system 1, 1a, 1b, 1c, 1d as already mentioned in the preceding paragraphs. This has the advantage, that it is avoided to unnecessarily accumulate the GDR distortions of the single wavelength optical signal induced by passing more than one optical filtering element 30 or 208 and it is avoided to even more narrow the bandwidth of the single wavelength optical signals.

Simulations have shown for a penalty of 1 dB for DPSK (DPSK = differential phase shift keying) using an optimal optical filtering element with a 3-dB bandwidth of 60 GHz more WSS elements can be passed until the penalty is reached in comparison to the cases where the DWDM channel is only filtered by the WSS itself or is filtered in addition by a multiplexer/demultiplexer pair. Here, the penalty is defined as the needed increase in the OSNR (OSNR = optical signal-to-noise ratio) in units of dB in order to achieve the same BER (BER = bit error rate) as compared to the case without the filtering induced degradation of signal quality.

Also for PSBT (PSBT = phase-shaped binary transmission) using an optimal optical filtering element with a 3-dB bandwidth of 40 GHz more WSS elements can be passed until the penalty of 2 dB is reached in comparison to the cases where the DWDM channel is only filtered by the WSS itself or is filtered in addition by a multiplexer/demultiplexer pair.

Therefore, in a further preferred embodiment of the invention the optical filtering element 30 or 208 has a 3-dB bandwidth of 60 GHz for DPSK or has a 3-dB bandwidth of 40 GHz for PSBT.

## Claims

1. An optical network element (20a, 20b, 20c) for a wavelength division multiplexing optical communication system (1, 1a, 1b, 1c, 1d), the optical network element (20a, 20b, 20c) comprising:
at least one input interface (201) for an input optical wavelength division multiplexed signal;
at least one output interface (202) for on output optical wavelength
division multiplexed signal;
at least one tributary interface (203, 204) for at least one add single wavelength optical signal to be added to a pass-through optical wavelength division multiplexed signal or for at least one drop single
wavelength optical signal to be dropped from the input optical wavelength division multiplexed signal; and
at least one wavelength selective element (207, 207a) connecting the
tributary interface (203, 204) with the input interface (201) of the output interface (202),
**characterized in that** the optical network element (20a, 20b, 20c) further comprises at least one optical filtering element (208) with a filter bandwidth (62) which is narrower than the filter bandwidth (61) of the wavelength selective element (207, 207a).

2. The optical network element (20a, 20b, 20c) according to claim 1, wherein the optical network element (30a, 20b, 20c) is a reconfigurable optical add-drop multiplexer.

3. The optical network element (20a, 20b) according to claim 1, wherein the optical filtering element (208) is located between the tributary interface (203, 204) and the wavelength selective element (207).

4. The optical network element (20c, 20b, 20c) according to claim 1, wherein the optical filtering element (208) has a group delay characteristic with minimised group delay variations across the filter bandwidth.

5. The optical network element (20a, 20b, 20c) according to claim 1, wherein the optical filtering element (208) has a periodic passband with a periodicity equal to a channel spacing of the input or output optical wavelength division multiplexed signal.

6. The optical network element (20c) according to claim 5, the optical network element (20c) further comprising at least one directional coupler (209) and at least one demultiplexer (205a), wherein the optical filtering element (208) is connected to the directional coupler (209) and the demultiplexer (205a).

7. The optical network element (20a, 20b, 20c) according to claim 5, wherein the optical filtering element (208) has an arrayed waveguide grating.

8. The optical network element (20a, 20b, 20c) according to claim 5, wherein the optical filtering element (208) has a wavelength interleaver filter.

9. A wavelength division multiplexing optical communication system (1, 1a, 1b, 1c, 1d) for transmitting optical wavelength division multiplexed signals, the wavelength division multiplexing optical communication system (1, 1a, 1b, 1c, 1d) comprising:
of least one optical transmission path (10);
at least one optical network element (20, 20a, 20b, 20c) with at least one input interface (201) for an input optical wavelength division multiplexed signal; at least one output interface (202) for an output optical wavelength division multiplexed signal; at least one tributary interface (203, 204) for at least one add single wavelength optical signal to be added to a pass-through optical wavelength division
multiplexed signal or for at least one drop single wavelength optical signal to be dropped from the input optical wavelength division multiplexed signal; and at least one wavelength selective element (207, 207a) connecting the tributary interface (203, 204) with the input interface (201) or the output interface (202),
**characterized in that** the wavelength division multiplexing optical communication system (1, 1a, 1b, 1c, 1d) further comprises at least one optical filtering element (30, 208) with a filter bandwidth (62) which is narrower than the filter bandwidth (61) of the wavelength selective element (207, 207a).

10. The wavelength division multiplexing optical communication system (1, 1a) according to claim 9, wherein the optical filtering element (30) is located outside the optical network element (20) and arranged in front of the tributary interface (203, 204).

11. A method for multiplexing single wavelength optical signals in a wavelength division multiplexing optical communication system (1, 1a, 1b, 1c, 1d), the method comprising the steps of:
- receiving an input optical wavelength division multiplexed signal:
- transmitting an output optical wavelength division multiplexed signal;
- adding at least one add single wavelength optical signal to a pass-through optical wavelength division multiplexed signal or dropping at least one drop single wavelength optical signal from the input optical wavelength division multiplexed signal,
**characterized in that** the method further comprises the step of filtering the single wavelength optical signal using an optical filtering element (30, 208) with a filter bandwidth (62) which is narrower than the filter bandwidth (61) of the wavelength selective element (207, 207a),

12. The method according to claim 11, wherein the filtering of the odd or drop single wavelength optical signal is performed only once during transmission from a source to a sink.

13. The method according to claim 11, wherein the transmitting is performed with a differential phase shift keying transmission mode or with a phase-shaped binary transmission mode.

14. The method according to claim 13, wherein the filtering is performed with a 3-dB bandwidth of 60 GHz for the differential phase shift keying mode.

15. The method according to claim 13, wherein the filtering is performed with a 3-dB bandwidth of 40 GHz for the phase-shaped binary transmission mode.

## Amended claims

### Amended claims in accordance with Rule 137(2) EPC.

**1.** An optical network element (20a, 20b, 20c) for a wavelength division multiplexing optical communication system (1, 1a, 1b, 1c, 1d), the optical network element (20a, 20b, 20c) comprising:
at least one input interface (201) for an input optical wavelength division multiplexed signal;
at least one output interface (202) for an output optical wavelength division multiplexed signal;
at least one tributary interface (203, 204) for at least one add single wavelength optical signal to be added to a pass-through optical
wavelength division multiplexed signal or for at least one drop single wavelength optical signal to be dropped from the input optical wavelength division multiplexed signal; and
at least one wavelength selective element (207, 207a) connecting the tributary interface (203, 204) with the input interface (201) or the output interface (202),
wherein the wavelength selective element (207, 207a) has a filter bandwidth (61) selective for the single wavelength optical signal,
**characterized in that** the optical network element (20a, 20b, 20c) further comprises at least one optical filtering element (208) with a filter bandwidth (62) which is narrower than the filter bandwidth (61) of the wavelength selective element (207, 207a).

**2.** The optical network element (20a, 20b, 20c) according to claim 1, wherein the optical network element (20a, 20b, 20c) is a reconfigurable optical add-drop multiplexer.

**3.** The optical network element (20a, 20b) according to claim 1, wherein the optical filtering element (208) is located between the tributary interface (203, 204) and the wavelength selective element (207).

**4.** The optical network element (20a, 20b, 20c) according to claim 1, wherein the optical filtering element (208) has a group delay characteristic with minimised group delay variations across the filter bandwidth.

**5.** The optical network element (20a, 20b, 20c) according to claim 1, wherein the optical filtering element (208) has a periodic passband with a periodicity equal to a channel spacing of the input or output optical wavelength division multiplexed signal.

**6.** The optical network element (20c) according to claim 5, the optical network element (20c) further comprising at least one directional coupler (209) and at least one demultiplexer (205a), wherein the optical filtering element (208) is connected to the directional coupler (209) and the demultiplexer (205a).

**7.** The optical network element (20a, 20b, 20c) according to claim 5, wherein the optical filtering element (208) has an arrayed waveguide grating.

**8.** The optical network element (20a, 20b, 20c) according to claim 5, wherein the optical filtering element (208) has a wavelength interleaver filter.

**9.** A wavelength division multiplexing optical communication system (1, 1a, 1b, 1c, 1d) for transmitting optical wavelength division multiplexed signals, the wavelength division multiplexing optical communication system (1, 1a, 1b, 1c, 1d) comprising:
at least one optical transmission path (10);
at least one optical network element (20, 20a, 20b, 20c) with at least one input interface (201) for an input optical wavelength division multiplexed signal; at least one output interface (202) for an output optical wavelength division multiplexed signal; at least one tributary interface (203, 204) for at least one add single wavelength optical signal to be added to a pass-through optical wavelength division multiplexed signal or for at least one drop single wavelength optical signal to be dropped from the input optical wavelength division multiplexed signal; and at least one wavelength selective element (207, 207a) connecting the tributary interface (203, 204) with the input interface (201) or the output interface (202),
wherein the wavelength selective element (207, 207a) has a filter bandwidth (61) selective for the single wavelength optical signal,
**characterized in that** the wavelength division multiplexing optical communication system (1, 1a, 1b, 1c, 1d) further comprises at least one optical filtering element (30, 208) with a filter bandwidth (62) which is narrower than the filter bandwidth (61) of the wavelength selective element (207, 207a).

**10.** The wavelength division multiplexing optical communication system (1, 1a) according to claim 9, wherein the optical filtering element (30) is located outside the optical network element (20) and arranged in front of the tributary interface (203, 204).

**11.** A method for multiplexing single wavelength optical signals in a wavelength division multiplexing optical communication system (1, 1a, 1b, 1c, 1d), the method comprising the steps of:
- receiving an input optical wavelength division multiplexed signal;
- transmitting an output optical wavelength division multiplexed signal;
- adding at least one add single wavelength optical signal to a pass-through optical wavelength division multiplexed signal or dropping at least one drop single wavelength optical signal from the input optical wavelength division multiplexed signal via at least one wavelength selective element (207, 207a) having a filter bandwidth (61) selective for the single wavelength optical signal,
**characterized in that** the method further comprises the step of filtering the single wavelength optical signal using an optical filtering element (30, 208) with a filter bandwidth (62) which is narrower than the filter bandwidth (61) of the wavelength selective element (207, 207a).

**12.** The method according to claim 11, wherein the filtering of the add or drop single wavelength optical signal is performed only once during transmission from a source to a sink.

**13.** The method according to claim 11, wherein the transmitting is performed with a differential phase shift keying transmission mode or with a phase-shaped binary transmission mode.

**14.** The Method according to claim 13, wherein the filtering is performed with a 3-dB bandwidth of 60 GHz for the differential phase shift keying mode.

**15.** The method according to claim 13, wherein the filtering is performed with a 3-dB bandwidth of 40 GHz for the phase-shaped binary transmission mode.
